# EUROPÄISCHE PATENTANMELDUNG

(11) **EP 4 600 098 A1**
(43) Veröffentlichungstag der Anmeldung: **13.08.2025**
(21) Anmeldenummer: 24156834.4
(22) Anmeldetag: 09.02.2024
(51) Int. Cl.: B60T 17/22, B60T 17/04, B60T 15/42

(54) **ENTLÜFTUNGSVENTIL, BREMSVORRICHTUNG UND SCHIENENFAHRZEUG**

(71) Anmelder: Schweizerische Bundesbahnen SBB, 3000 Bern (CH)
(72) Erfinder: von Arx, Raphael, 3000 Bern (CH)
(74) Vertreter: Rutz & Partner

(57) **Zusammenfassung**

Das Entlüftungsventil (1), das insbesondere für Bremsvorrichtungen (100) in Schienenfahrzeugen (5) vorgesehen ist, umfasst ein Ventilgehäuse (11), das einen Eingangskanal (1110) aufweist, und einen Ventilkopf (12), der vom Ventilgehäuse (11) gehalten ist, der einen Ausgangskanal (1260) aufweist und der einen Ventilkörper (125) mit wenigstens einem darin vorgesehenen Entlüftungskanal (122) umfasst, der von einer Entlüftungsöffnung (120) zu einer Aussenseite des Ventilkörpers (125) verläuft. Erfindungsgemäss ist vorgesehen,
dass das Ventilgehäuse (11) eine Kolbenkammer (110) aufweist, die einerseits an den Eingangskanal (1110) und die anderseits an die Entlüftungsöffnung (120) des wenigstens einen Entlüftungskanals (122) anschliesst;
dass der Ventilkörper (125) wenigstens einen Durchführungskanal (121) aufweist, der die Kolbenkammer (110) mit dem Ausgangskanal (1260) verbindet,
dass ein Ventilkolben (13) vorgesehen ist,
- der in der Kolbenkammer (110) koaxial zu einer Arbeitsachse (x) der Kolbenkammer (110) gegen den Ventilkörper (125) verschiebbar gelagert ist,
- der eine dem Eingangskanal (1110) zugewandte Rückseite (13R), eine dem Ventilkörper (125) zugewandte Frontseite (13F) und wenigstens einen Kolbenkanal (130) aufweist, der von der Rückseite (13R) zur Frontseite (13F) verläuft,

dass an der Frontseite (13F) des Ventilkolbens (13) ein Dichtungselement (15) gehalten ist, das der Entlüftungsöffnung (120) zugewandt ist und mittels dessen die Entlüftungsöffnung (120) abschliessbar ist, wenn der Ventilkolben (13) gegen den Ventilkörper (125) verschoben wird, und
dass eine Ventilfeder (14) vorgesehen ist, die mit einem rückseitigen Endstück (142) an der Frontseite (13F) des Ventilkolbens (13) und mit einem frontseitigen Endstück (141) am Ventilkörper (125) anliegt.

## Beschreibung

Die Erfindung betrifft ein Entlüftungsventil für eine Bremsvorrichtung, eine Bremsvorrichtung, die ein solches Entlüftungsventil umfasst, und ein Fahrzeug, insbesondere ein Schienenfahrzeug, das mit wenigstens einer solchen Bremsvorrichtung ausgerüstet ist.

Pneumatische Bremsvorrichtungen von Schienenfahrzeugen umfassen üblicherweise ein Steuerventil, an das an einem Eingang eine Druckleitung einer Druckluftquelle und an einem Ausgang wenigstens eine Bremsleitung angeschlossen ist, die mit wenigstens einem Bremszylinder verbunden ist. Der Bremszylinder umfasst üblicherweise einen Bremskolben mit einer damit verbundenen Kolbenstange, die mit einem Bremselement, beispielsweise einer Bremsbacke oder einer Bremsscheibe verbunden ist, die während des Bremsvorgangs auf ein Rad des Fahrzeugs einwirkt. Zur Durchführung eines Bremsvorgangs wird durch Betätigung des Steuerventils Druckluft von der Druckluftquelle über die Druckleitung und das Steuerventil sowie die Bremsleitung zum Bremszylinder geführt, dessen Bremskolben dadurch ausgefahren wird. Zur Beendigung des Bremsvorgangs wird das Steuerventil wiederum betätigt, und die Druckleitung von der Bremsleitung getrennt, die üblicherweise mit einem Ausgang des Steuerventils verbunden wird, über den der Luftdruck in der Bremsleitung abgebaut werden kann.

Dabei ist wünschenswert, dass der Druck möglichst rasch und vollständig abgebaut wird, sodass sich die Bremsen unverzüglich und vollständig lösen. Sofern beispielsweise am Steuerventil eine Fehlfunktion auftritt und der Druck nicht vollständig abgebaut wird, ist es möglich, dass sich die Bremsen nicht vollständig lösen und eine Bremswirkung permanent erhalten bleibt. Dies führt zu unerwünschten Schallemissionen, zu einem raschen Verschleiss der betätigten Bremselemente und zu einem andauernd hohen Energieverbrauch bei der Weiterfahrt des Fahrzeugs.

Die DE3003393A1 offenbart Lösungen zur Verkürzung der Lösezeit bei einer pneumatischen Bremsvorrichtung. Es wird beschrieben, dass dem Bremszylinder ein Schnelllöseventil vorgeschaltet werden kann, das jedoch ein zusätzliches Organ mit einem Entlüftungsventil für den Bremszylinder darstellt, welches bei einer Störung eine Druckbeaufschlagung des Bremszylinders ausschliessen und somit die Funktionsfähigkeit der ganzen Bremseinrichtung gefährden kann.

Alternativ wird vorgeschlagen, dass in die Bremsdruckleitung eine Drossel eingeführt wird, zu der ein Kolbenventil parallel geschaltet wird, das ein Entlüftungsventil und eine damit verbundene Steuermembran umfasst. Das Kolbenventil ist derart ausgebildet, dass der daran anliegende Differenzdruck, der bei Durchfluss des Bremsmediums über der Drossel entsteht, an die Steuermembran angelegt wird, die das Entlüftungsventil betätigt, sobald der Differenzdruck einen vorgegebenen Wert überschreitet. Wird nach Durchführung einer Bremsung der Druck in der Bremsleitung abgebaut resultiert über der Drossel ein hoher Differenzdruck, weshalb die Steuermembran das Entlüftungsventil betätigt und der Druck in der Bremsleitung zusätzlich über das Entlüftungsventil abgebaut wird. Sofern der Druck hingegen nur langsam abgebaut wird, wird der notwendige Differenzdruck über der Drossel möglicherweise nicht erreicht und das Entlüftungsventil nicht geöffnet. Ein restlicher Bremsdruck kann in diesem Fall über das Entlüftungsventil nicht abgeleitet werden.

Der vorliegenden Erfindung liegt daher die Aufgabe zugrunde, ein verbessertes Entlüftungsventil insbesondere für eine Bremsvorrichtung, eine verbesserte Bremsvorrichtung mit einem solchen Entlüftungsventil, sowie ein Fahrzeug, insbesondere ein Schienenfahrzeug, zu schaffen, das mit wenigstens einer solchen Bremsvorrichtung ausgerüstet ist.

Mittels des Entlüftungsventils soll nach Abschluss eines Bremsvorgangs ein verbleibender Bremsdruck in einer Bremsleitung rasch abgebaut werden können.

Zu diesem Zweck sollen nebst dem Entlüftungsventil keine weiteren Vorrichtungsteile, wie eine Drossel oder dergleichen, benötigt werden. Auf die Messung eines Differenzdrucks soll verzichtet werden können.

Das Entlüftungsventil soll mit wenigen Vorrichtungsteilen einfach aufgebaut sein und zuverlässig arbeiten, sodass nach einem Bremsvorgang ein verbleibender Bremsdruck stets innerhalb kurzer Zeit abgebaut werden kann und die Bremsen rasch und zuverlässig gelöst werden können.

Sofern am Entlüftungsventil ein Defekt auftritt, soll die Funktion der Bremsvorrichtung trotzdem stets gewährleistet bleiben.

Das Entlüftungsventil soll geringe Abmessungen aufweisen und mit minimalem Aufwand in eine neue oder bereits bestehende Bremsvorrichtung integriert werden können.

Eine Fehlfunktion der Bremsvorrichtung, welche die Aktivierung des Entlüftungsventils soll zudem in einfacher Weise erfasst und registriert werden können.

Diese Aufgabe wird mit einem Entlüftungsventil gemäss Anspruch 1, einer Bremsvorrichtung gemäss Anspruch 14 und einem Fahrzeug gemäss Anspruch 15 gelöst. Vorteilhafte Ausgestaltungen der Erfindung sind in weiteren Ansprüchen angegeben.

Das Entlüftungsventil, das insbesondere für Bremsvorrichtungen in Fahrzeugen, insbesondere Schienenfahrzeugen vorgesehen ist, umfasst ein Ventilgehäuse, das einen Eingangskanal aufweist, und einen Ventilkopf, der vom Ventilgehäuse gehalten ist, der einen Ausgangskanal aufweist und der einen Ventilkörper mit wenigstens einem darin vorgesehenen Entlüftungskanal umfasst, der von einer Entlüftungsöffnung zu einer Aussenseite des Ventilkörpers verläuft.

### Erfindungsgemäss ist vorgesehen,

- dass das Ventilgehäuse eine Kolbenkammer aufweist, die einerseits an den Eingangskanal und die anderseits an die Entlüftungsöffnung des wenigstens einen Entlüftungskanals anschliesst;
- dass der Ventilkörper wenigstens einen Durchführungskanal aufweist, der die Kolbenkammer mit dem Ausgangskanal verbindet,
- dass ein Ventilkolben vorgesehen ist,
   - der in der Kolbenkammer koaxial zu einer Arbeitsachse der Kolbenkammer gegen den Ventilkörper verschiebbar gelagert ist,
   - der eine dem Eingangskanal zugewandte Rückseite, eine dem Ventilkörper zugewandte Frontseite und wenigstens einen Kolbenkanal aufweist, der von der Rückseite zur Frontseite des Ventilkolbens verläuft,
- dass an der Frontseite des Ventilkolbens ein Dichtungselement gehalten ist, das der Entlüftungsöffnung zugewandt ist und mittels dessen die Entlüftungsöffnung abschliessbar ist, wenn der Ventilkolben gegen den Ventilkörper verschoben wird, und
- dass eine Ventilfeder beispielsweise in der Ausgestaltung einer Schraubenfeder vorgesehen ist, die mit einem rückseitigen Endstück an der Frontseite des Ventilkolbens und mit einem frontseitigen Endstück am Ventilkörper anliegt.

Das Entlüftungsventil kann vorteilhaft in pneumatischen Bremsvorrichtungen eingesetzt werden, die mit einem Steuerventil oder einem Führerbremsventil ausgerüstet sind, das durch eine Bremsleitung mit einem Bremszylinder verbunden ist, mittels dessen wenigstens ein Bremselement betätigbar ist. Das erfindungsgemässe Entlüftungsventil wird vorzugsweise zwischen einen ersten und einen zweiten Leitungsabschnitt der Bremsleitung eingefügt oder direkt an das Steuerventil oder den Bremszylinder angeschlossen.

Vorzugsweise umfasst das Entlüftungsventil einen Eingangsstutzen, der den Eingangskanal umschliesst und der mit dem ersten Leitungsabschnitt der Bremsleitung verbindbar ist, und einen Ausgangsstutzen, der den Ausgangskanal umschliesst und der beispielsweise von einem Klemmring umschlossen ist, mittels dessen eine Anschlussmutter gehalten ist, mittels der der zweite Leitungsabschnitt mit dem Entlüftungsventil verbindbar ist.

Der Durchgang vom Eingangskanal zum Ausgangskanal des Entlüftungsventils und somit, nach der Installation des Entlüftungsventils, vom ersten zum zweiten Leitungsabschnitt der Bremsleitung ist permanent geöffnet. Das Bremsmedium kann stets durch den Eingangskanal, die Kolbenkammer des Ventilgehäuses, den wenigstens einen Kolbenkanal des Ventilkolbens und den wenigstens einen Durchführungskanal im Ventilkörper ungehindert zum Ausgangskanal gelangen.

Sobald vom Steuerventil ein Bremsdruck über den ersten Leitungsabschnitt der Bremsleitung in den Eingangskanal des Entlüftungsventils ein gesteuert wird, wird das Bremsmedium, vorzugsweise Druckluft, einerseits durch die Kolbenkammer des Ventilgehäuses und durch die Kolbenkanäle und weiter über die Durchgangskanäle im Ventilkopf in den Ausgangskanal und weiter dem Bremszylinder zugeführt, der typischerweise mittels einer Kolbenstange die Bremselemente des Fahrzeugs betätigt. Anderseits wird bei der Einsteuerung des Bremsmediums die dem Eingangskanal zugewandte Rückseite des Ventilkolbens mit einem Druck beaufschlagt, welcher entsprechend der wirksamen Fläche der Rückseite eine Kraft auf den Ventilkolben ausübt und diesen gegen den Ventilkopf und somit gegen die Entlüftungsöffnung im Ventilkörper verschiebt.

Zum Zeitpunkt der Einleitung des Bremsdrucks an der Eingangsseite des Entlüftungsventils liegt der Druck an der Ausgangsseite des Entlüftungsventils auf einem Minimum, weshalb zwischen der Rückseite der Frontseite des Ventilkolbens eine hohe Druckdifferenz resultiert und der Ventilkolben mit einer hohen Schubkraft verschoben und die Ventilfeder komprimiert wird.

Der Ventilkolben und somit das an der Frontseite des Ventilkolbens vorgesehene Dichtungselement werden somit kraftvoll gegen die Entlüftungsöffnung geführt, sodass das Dichtungselement nach einem Bruchteil einer Sekunde nach Einleitung des Bremsdrucks die Entlüftungsöffnung dicht abschliesst.

Das Dichtungselement und die Entlüftungsöffnung sind aufeinander abgestimmt, sodass bei Einleitung des Bremsdrucks die Entlüftungsöffnung und somit auch der wenigstens eine Entlüftungskanal dicht abgeschlossen wird und das Bremsmedium somit nur über die Durchgangskanäle in den Ausgangskanal in den Bremszylinder, nicht aber über den wenigstens einen Entlüftungskanal nach aussen gelangen kann.

Das Dichtungselement kann in verschiedenen Ausgestaltungen an die Entlüftungsöffnung angepasst sein, um seine Verschlussfunktion zuverlässig zu erfüllen. Nachstehend wird eine bevorzugte Ausgestaltung des Dichtungselements beschrieben.

Nach Einleitung des Bremsmediums in den Bremszylinder erhöht sich der Bremsdruck im Bremszylinder und somit an der Ausgangsseite des Entlüftungsventils schlagartig, weshalb die Druckdifferenz zwischen der Rückseite und der Frontseite des Ventilkolbens aufgehoben wird und der an der Rückseite des Ventilkolbens anliegende Druck identisch ist zudem an der Frontseite anliegenden Druck.

Da der Ventilkolben an seiner Frontseite mit dem Dichtungselement am Ventilkörper anliegt und die Entlüftungsöffnung abschliesst, aber mit seiner ganzen Rückseite vom Bremsmedium beaufschlagt werden kann, resultieren an der Rückseite und der Frontseite des Ventilkolbens unterschiedliche Wirkungsflächen und unterschiedliche Kraftvektoren, die einander diametral entgegen gerichtet sind.

Es resultiert somit nicht nur beim dynamischen Vorgang der Einleitung des Bremsmediums in das Entlüftungsventil eine Differenz der Kraftvektoren, die auf die Rückseite und die Frontseite des Ventilkolbens einwirken. Auch bei einem statischen Zustand, bei dem sich die Druckdifferenz zwischen der Rückseite und der Frontseite des Ventilkolbens abgebaut hat, verbleibt aufgrund der unterschiedlichen Wirkungsflächen an der Rückseite und der Frontseite des Ventilkolbens eine Differenzkraft, die auf die Rückseite des Ventilkolbens einwirkt und diesen gegen die Kraft der Ventilfeder gegen die Entlüftungsöffnung drückt. Beim erfindungsgemässen Entlüftungsventil ist die Erzeugung eines Differenzdrucks zu dessen Betätigung nicht erforderlich.

Solange aufgrund des im Entlüftungsventil herrschenden Drucks die auf den Ventilkolben einwirkende Differenzkraft höher ist als die Rückstosskraft der Ventilfeder, wird der Ventilkolben nicht zurückgeführt und die Entlüftungsöffnung bleibt verschlossen. Die Ventilfeder ist daher derart zu dimensionieren, dass deren Rückstosskraft kleiner ist als die Kraftdifferenz, die bei einem Bremsvorgang angelegtem Bremsdruck am Ventilkolben resultiert.

Nach dem dynamischen Vorgang der Einleitung des Bremsmediums und dem Ausgleich des Bremsdrucks an der Rückseite und der Frontseite des Ventilkolbens bleibt die Entlüftungsöffnung daher verschlossen. Erst nachdem das Steuerungsventil wieder betätigt und der Bremsdruck abgebaut wurde, reduziert sich die am Ventilkolben verbleibende Differenzkraft auf einen Wert, der unterhalb des Werts der Rückstosskraft der Ventilfeder liegt. Bei Auftreten eines bestimmten Drucks innerhalb des Entlüftungsventils, nachstehend Schaltdruck genannt, wird der Ventilkolben von der Ventilfeder zurückgestossen und die Entlüftungsöffnung freigegeben und der wenigstens eine Entlüftungskanal geöffnet. Nach Öffnung des wenigstens einen Entlüftungskanals kann das Bremsmedium somit durch den wenigstens einen Entlüftungskanal entweichen. Der Schaltdruck kann durch Wahl der Federkraft der Ventilfeder bestimmt werden. Mit höherer Federkraft steigt der Schaltdruck, bei dem die Entlüftungsöffnung freigelegt wird.

Das Öffnen des wenigstens einen Entlüftungskanals erfolgt daher bei einem Abbau des Luftdrucks innerhalb des Entlüftungsventils bis zum vorgesehenen Schaltdruck. Bei einer langsamen Erhöhung des Luftdrucks innerhalb des Entlüftungsventils erfolgt das Schliessen des wenigstens einen Entlüftungskanals bei Erreichen des Schaltdrucks. Dabei kann eine Hysterese auftreten, bei der sich der Schaltdruck beim Hochfahren des Drucks vom Schaltdruck beim Herunterfahren des Drucks im Entlüftungsventil unterscheidet.

Das Entlüftungsventil kann somit auch für andere Anwendungen verwendet werden, beispielsweise um einen vorgesehenen Minimaldruck in einem Behälter zu überwachen. Sofern dieser Minimaldruck unterschritten wird, öffnet das Entlüftungsventil den Entlüftungskanal über den beispielsweise ein Druckschalter betätigt wird.

In einer erfindungsgemässen Bremsvorrichtung wird das Entlüftungsventil verwendet, um sicherzustellen, dass nach Abschluss des Bremsvorgangs der Bremsdruck in der Bremsleitung vollständig abgebaut und die Bremse vollständig gelöst wird. Bei einer pneumatischen Bremsung beträgt der Bremsdruck beispielsweise 1 bar - 5 bar. Bei diesem Druck ist das Entlüftungsventil ohne Funktion, der wenigstens eine Entlüftungskanal ist verschlossen und das Bremsmedium wird normal in den Bremszylinder geleitet, um dort den genannten Bremsdruck aufzubauen. Das Entlüftungsventil kann in beliebige pneumatische Bremsvorrichtungen eingesetzt werden, bei denen auch ein wesentlich anderer Bremsdruck zur Anwendung kommt.

Wenn die Bremse wieder gelöst wird, sinkt der Druck in der Bremszylinderleitung normalerweise wieder auf Ausgangswert. Sollte nach Abschluss des Bremsvorgangs ein Restdruck beispielsweise in der Höhe der Hälfte des Bremsdrucks im Bremszylinder verbleiben, liegt eine Fehlfunktion beispielsweise im Steuerventil vor. Aufgrund des verbliebenen Restdrucks im Bremszylinder können die Bremsbeläge die Bremsscheibe weiterhin kontaktieren, was zu einer Erhitzung und Zerstörung der Bremsbeläge oder zur Auslösung eines Festbremsalarms führen kann.

Diese Fehlfunktion wird durch das erfindungsgemässe Entlüftungsventil korrigiert, welches bei einem Schaltdruck, der um einen vorgegebenen Wert unterhalb des Bremsdrucks liegt, den wenigstens einen Entlüftungskanal öffnet und das Bremsmedium entweichen lässt. Der Schaltdruck liegt beispielsweise in einem Bereich von 10% - 50% des Bremsdrucks. Der Schaltdruck kann vom Anwender jedoch frei gewählt werden. Beispielsweise wird bei einem Bremsdruck von 1 bar - 5 bar ein Schaltdruck von 0.5 bar vorgesehen.

Die Zeitdauer für den Abbau des verbleibenden Bremsdrucks kann durch entsprechende Dimensionierung der Entlüftungskanäle erfolgen. Vorzugsweise wird vorgesehen, dass der nach Abschluss eines Bremsvorgangs gegebenenfalls verbleibende Bremsdruck innerhalb von beispielsweise 20 Sekunden abgebaut wird. Diese Entlüftungsdauer kann durch entsprechende Dimensionierung und Formgebung des Kopplungskopfs und/oder durch Dimensionierung der Entlüftungskanäle und/oder durch ein Justierelement wahlweise bestimmt werden. Beispielsweise wird ein Justierelement vorgesehen, mittels dessen der Querschnitt der Verschlusskammer oder der Entlüftungskanäle reduzierbar ist. Beispielsweise kann auch eine Schraube mit einem axialen Durchgangskanal, dessen Durchmesser die Entlüftungsdauer bestimmt, in die Ausgangsöffnung des wenigstens einen Entlüftungskanals eingeschraubt werden.

Vorzugsweise ist ein gewünschter Schaltdruck durch eine entsprechende Einstellung der Vorspannung der Ventilfeder einstellbar. Beispielsweise wird ein Distanzelement zwischen das rückseitige Endstück der Ventilfeder und den Ventilkolben oder das frontseitige Endstück der Ventilfeder und den Ventilkörper eingesetzt. Vorzugsweise ist das Distanzelement als Schraubenmutter oder Gewindescheibe ausgebildet, die mit einem Innengewinde in ein entsprechendes Gewindeteil des Ventilkolbens oder des Ventilkörpers eingreifen und gedreht werden kann, bis eine gewünschte Vorspannung der Ventilfeder erreicht ist.

In einer bevorzugten Ausgestaltung ist vorgesehen, dass der Ventilkörper eine Verschlusskammer aufweist, die an die Entlüftungsöffnung anschliesst und die mit dem wenigstens einen Entlüftungskanal verbunden ist, und dass der Ventilkolben einen Kolbenkopf aufweist, der in die Verschlusskammer einschiebbar ist. Vorzugsweise weist der Ventilkolben einen Kolbenhals auf, der von einem Dichtungselement umschlossen ist und an den ein Kolbenkopf anschliesst, der in die Verschlusskammer einführbar ist. Sobald ein Bremsdruck an das Entlüftungsventil angelegt wird, wird der Ventilkolben gegen den Ventilkörper verschoben, der und der Kolbenkopf in die Verschlusskammer eingeführt, sodass das Dichtungselement den Rand der Entlüftungsöffnung überlappt und die Entlüftungsöffnung dicht abschliesst. Der Kolbenkopf dient dabei als Führungselement, das gewährleistet, dass das Dichtungselement präzise gegen die Entlüftungsöffnung geführt wird. Zusätzlich oder alternativ kann der Kolbenkopf selbst als Dichtungselement dienen, mittels dessen die Entlüftungsöffnung abgeschlossen wird.

Vorzugsweise ist der Durchmesser des Kolbenhalses kleiner als der Durchmesser des Kolbenkopfs. Ein ringförmiges elastisches Dichtungselement kann daher gedehnt, über den Kolbenkopf geführt und kragenförmig und vorzugsweise dicht anschliessend um den Kolbenhals gelegt werden. Nach der Einführung des Kolbenkopf in die Verschlusskammer umschliesst das Dichtungselement daher dicht abschliessend die Entlüftungsöffnung und liegt zudem dicht abschliessend am Kolbenhals oder einer anschliessenden Schulter an.

Vorzugsweise ist das Dichtungselement aus einem elastischen Werkstoff, wie einem Elastomerwerkstoff, beispielsweise Kautschuk, NBR (AcrylnitrilButadien-Kautschuk), oder Gummi gefertigt.

Der Ventilkolben ist hingegen vorzugsweise aus Aluminium oder einem hartelastischen vorzugsweise gleitfähigen Kunststoff, wie POM, gefertigt.

In einer weiteren vorzugsweisen Ausgestaltung ist vorgesehen, dass der Ventilkörper an einer der Kolbenkammer zugewandten Seite einen Eingangszylinder aufweist, dessen Aussendurchmesser kleiner ist als der Durchmesser der vorzugsweise zylindrischen Kolbenkammer senkrecht zur Arbeitsachse, der die Entlüftungsöffnung umschliesst und der vom frontseitigen Endstück der Ventilfeder umschlossen ist. In der Verschlussposition liegt das Dichtungselement dicht abschliessend an der Stirnseite des Eingangszylinders an.

Vorzugsweise ist an der Stirnseite des Eingangszylinders ein Dichtungsring angeformt, der in der Verschlussposition formschlüssig in das elastische Dichtungselement eingreifen kann, um eine maximale Abdichtung zu erreichen.

Der Ventilkolben umfasst an der Frontseite vorzugsweise einen Montagezylinder, der über den Kolbenhals mit dem Kolbenkopf verbunden und der vom rückseitigen Endstück der Ventilfeder umschlossen ist. Die Ventilfeder umschliesst daher mit dem frontseitigen Endstück vorzugsweise den Eingangszylinder des Ventilkörper und mit dem rückseitigen Endstück vorzugsweise den Montagekörper des Ventilkolbens.

Der Ventilkolben ist vorzugsweise radförmig ausgebildet und umfasst an der Aussenseite einen Führungszylinder, zentral den Montagezylinder und dazwischen eine Kolbenwand mit den Kolbenkanälen. Der relativ lange Führungszylinder gewährleistet eine präzise Führung des Ventilkolbens in der Kolbenkammer.

In bevorzugten Ausgestaltungen ist vorgesehen, dass mehrere Kolbenkanäle ringförmig, vorzugsweise in gleichen Abständen voneinander und in gleichen Abständen von der Arbeitsachse der Kolbenkammer angeordnet sind. Das Bremsmedium kann den Ventilkolben daher gleichmässig durchströmen.

Weiter ist vorzugsweise vorgesehen, dass mehrere der Kolbenkammer zugewandte Kanalöffnungen der Durchgangskanäle ringförmig, vorzugsweise in gleichen Abständen voneinander und in gleichen Abständen von der Arbeitsachse der Kolbenkammer angeordnet sind und dass die Durchgangskanäle ausgehend von den Kanalöffnungen geneigt durch den Ventilkörper hindurch in den Ausgangskanal hinein verlaufen. Der Ausgangskanal kann daher einen relativ kleinen Durchmesser aufweisen.

Auch die Entlüftungskanäle durchlaufen den Ventilkörper vorzugsweise in gleichen Abständen voneinander. Besonders einfach können die Entlüftungskanäle in den Ventilkörper eingearbeitet werden, indem diese in ein Eingangskanalsegment und ein Ausgangskanalsegment aufgeteilt werden, die senkrecht zueinander ausgerichtet und miteinander verbunden sind. Das Eingangskanalsegment kann durch eine Bohrung senkrecht zur Kolbenachse und das Ausgangskanalsegment kann durch eine Bohrung parallel zur Kolbenachse in den Ventilkörper eingearbeitet werden.

Das Ventilgehäuse und der Ventilkopf sind vorzugsweise miteinander verschraubt. Nach der Verschraubung ist der Ventilkopf zumindest teilweise innerhalb des Ventilgehäuses gehalten. Dazu wird vorzugsweise vorgesehen, dass das Ventilgehäuse einen Kopplungszylinder mit einem Innengewinde und der Ventilkörper ein Verbindungsteil mit einem Aussengewinde aufweist. Damit diese Schraubverbindung sich nicht selbsttätig lösen kann, umfasst das Entlüftungsventil vorzugsweise eine Sicherungsschraube, die mit dem Ventilkörper verschraubbar ist, und eine Sicherungsscheibe, die mittels der Sicherungsschraube mit dem Ventilkörper derart verbindbar ist, dass sie in eine Ausnehmung im Kopplungszylinder eingreift. Nach der Verbindung des Ventilkopfs mit dem Ventilgehäuse und der nachfolgenden Montage der Sicherungsscheibe, kann sich der Ventilkopf nicht mehr selbsttätig vom Ventilgehäuse lösen.

Nachfolgend wird die Erfindung anhand von Zeichnungen näher erläutert. Dabei zeigt:

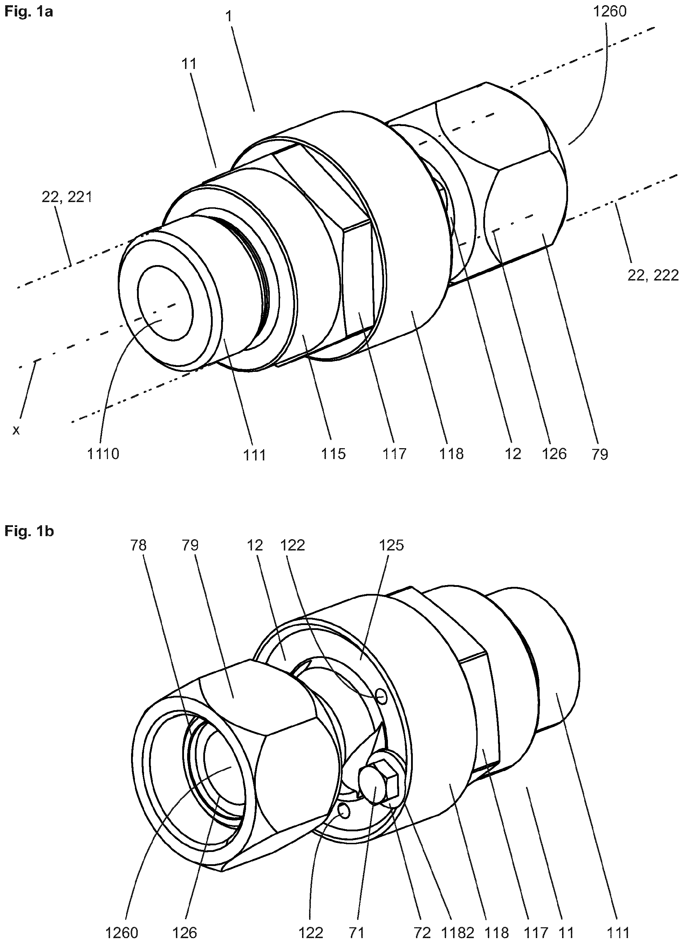

- Fig. 1a: die Eingangsseite eines erfindungsgemässen Entlüftungsventils 1, das ein Ventilgehäuse 11 mit einem Eingangsstutzen 111, der einen Eingangskanal 1110 umschliesst und der mit einem ersten Leitungsabschnitt 221 einer Bremsleitung 22 verbunden ist, und das einen Ventilkopf 12 mit einem Ausgangsstutzen 126 (strichpunktiert gezeigt) aufweist, der mittels einer Anschlussmutter 79 mit einem zweiten Leitungsabschnitt 222 der Bremsleitung 22 verbunden ist;
- Fig. 1b: die Ausgangsseite des Entlüftungsventils 1 von Fig. 1a mit dem in das Ventilgehäuse 11 eingesetzten Ventilkopf 12, der einen Ausgangsstutzen 126, der einen Ausgangskanal 1260 umschliesst, und einen Ventilkörper 125 mit mehreren darin vorgesehenen Entlüftungskanälen 122 umfasst;

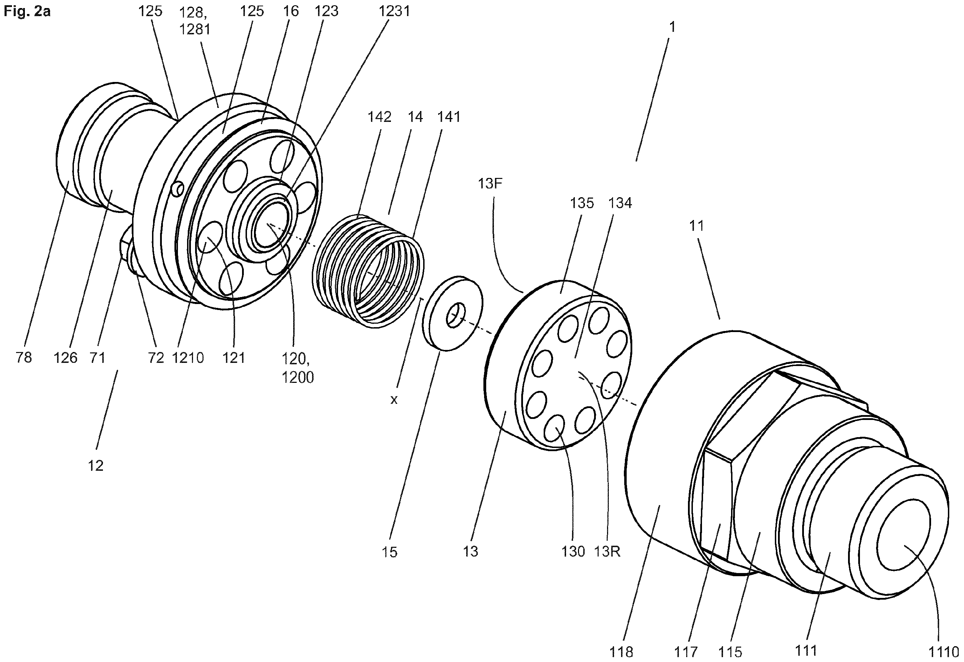

- Fig. 2a: das Entlüftungsventil 1 in der Ausrichtung von Fig. 1a in Explosionsdarstellung;

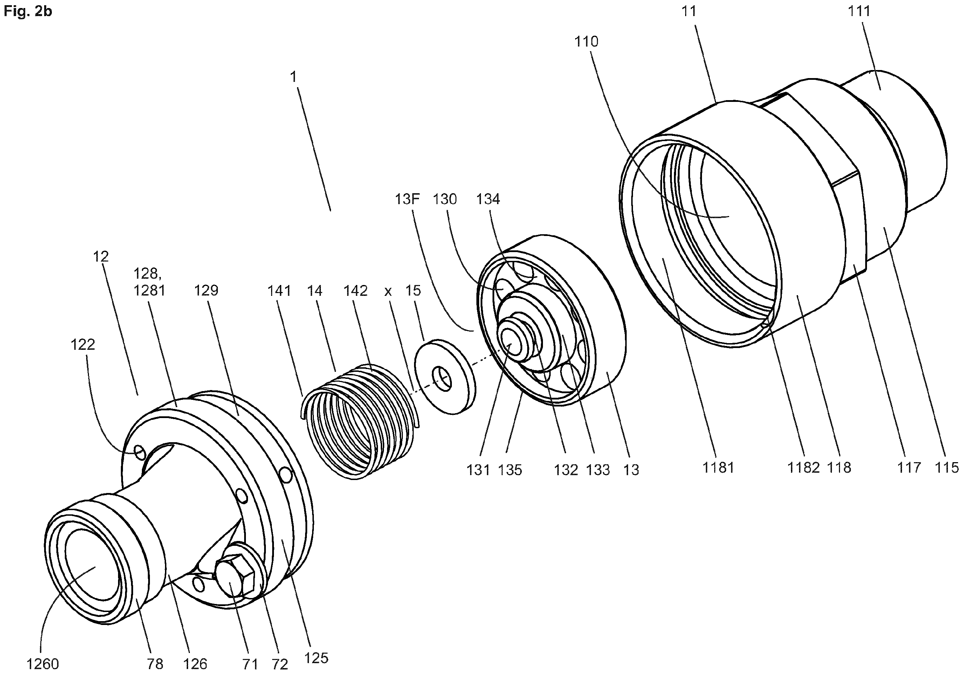

- Fig. 2b: das Entlüftungsventil 1 in der Ausrichtung von Fig. 1b in Explosionsdarstellung;

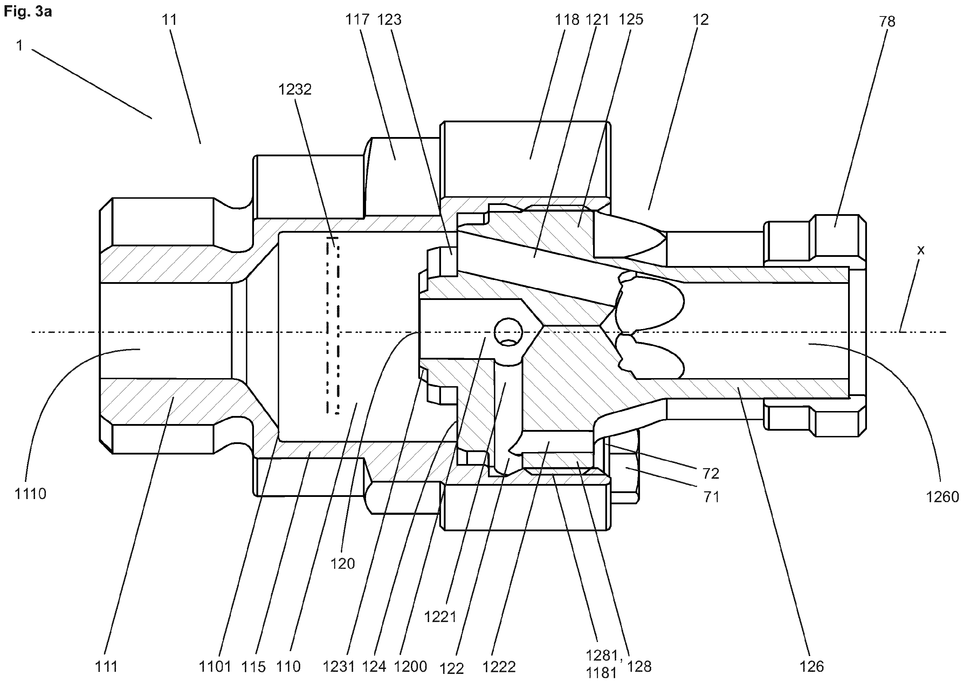

- Fig. 3a: einen parallel zu einer Arbeitsachse x verlaufenden Viertelschnitt durch das Ventilgehäuse 11, das eine Kolbenkammer 110 aufweist, und durch den in das Ventilgehäuse 11 eingesetzten Ventilkopf 12, der im Ventilkörper 125 mehrere Durchgangskanäle 121 aufweist, die den Eingangskanal 1110 mit dem Ausgangskanal 1260 verbinden, und der im Ventilkörper 125 eine Verschlusskammer 1200 aufweist, die an eine Entlüftungsöffnung 120 anschliesst und von der Entlüftungskanäle 122 zur Aussenseite des Ventilkörpers 125 verlaufen;

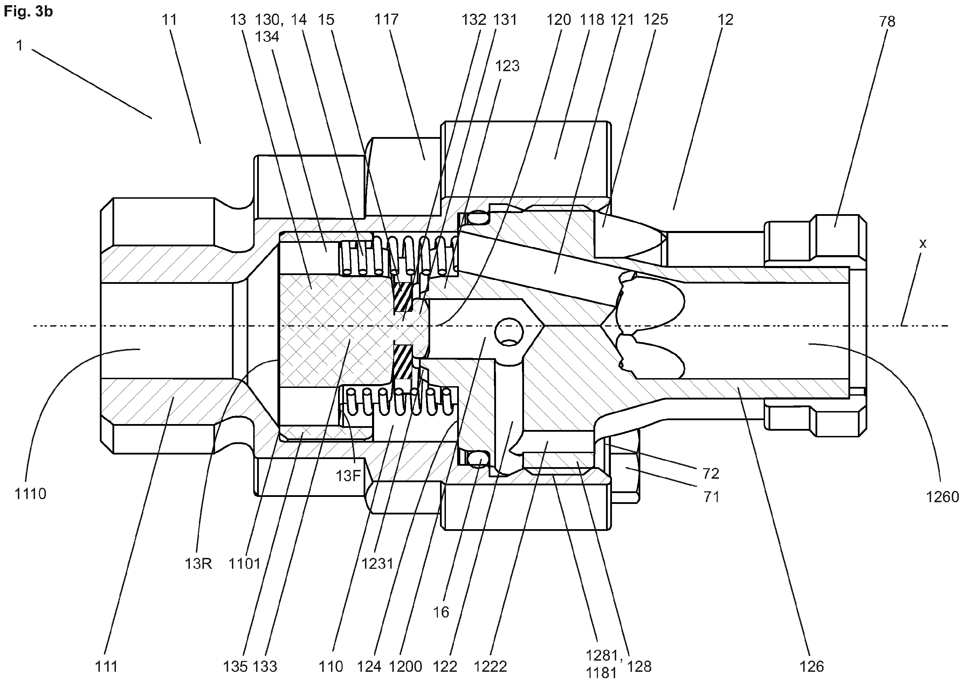

- Fig. 3b: einen parallel zu einer Arbeitsachse x verlaufenden Viertelschnitt durch das das Entlüftungsventil 1 von Fig. 1a mit einem Ventilkolben 13, der in einer Kolbenkammer 110 entlang der Arbeitsachse x der Kolbenkammer 110 verschiebbar gelagert ist, der wenigstens einen Kolbenkanal 130 aufweist, der an einer Ventilfeder 14 anliegt, der einen Kolbenhals 132 aufweist, welcher von einem Dichtungselement 15 umschlossen ist, und der einen an den Kolbenhals 132 anschliessenden Kolbenkopf 131 aufweist, der in die Verschlusskammer 1200 einführbar ist, um die Entlüftungskanäle 122 zu verschliessen;

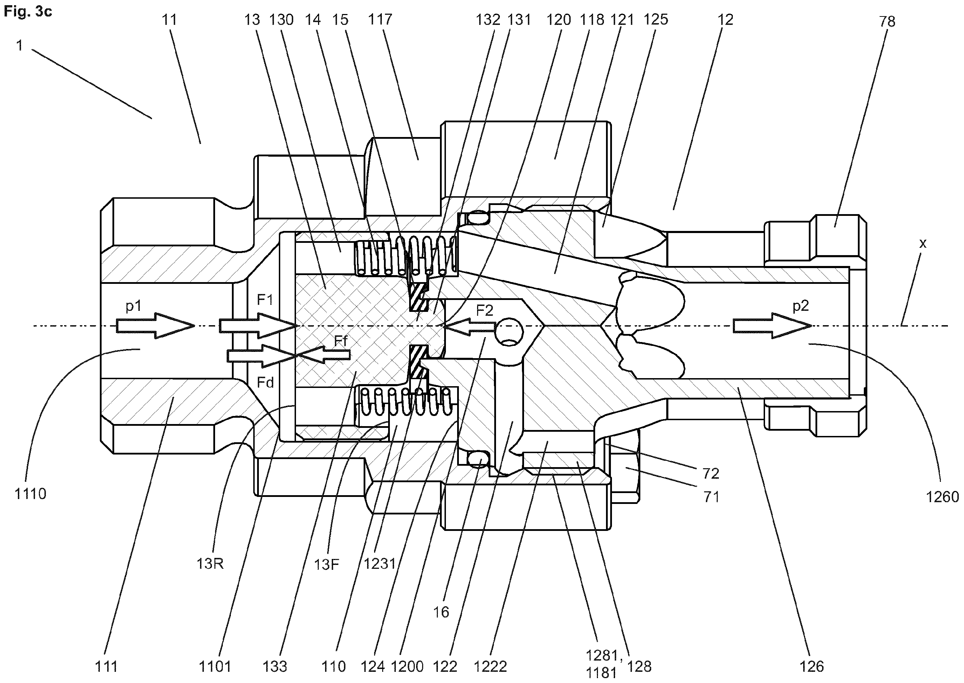

- Fig. 3c: das Entlüftungsventil 1 von Fig. 3b nach Anlegen eines Bremsdrucks p1 an den Eingangskanal 1110, durch den der Ventilkolben 13 nach rechts und der Kolbenkopf 131 in die Verschlusskammer 1200 eingeführt wurde, sodass das Dichtungselement 15 die Entlüftungsöffnung 120, die Verschlusskammer 1200 und die Entlüftungskanäle 122 dicht abschliesst und das Bremsmedium vom Eingangskanal 1110 zum Ausgangskanal 1260 des Entlüftungsventils 1 übertragen wird; und

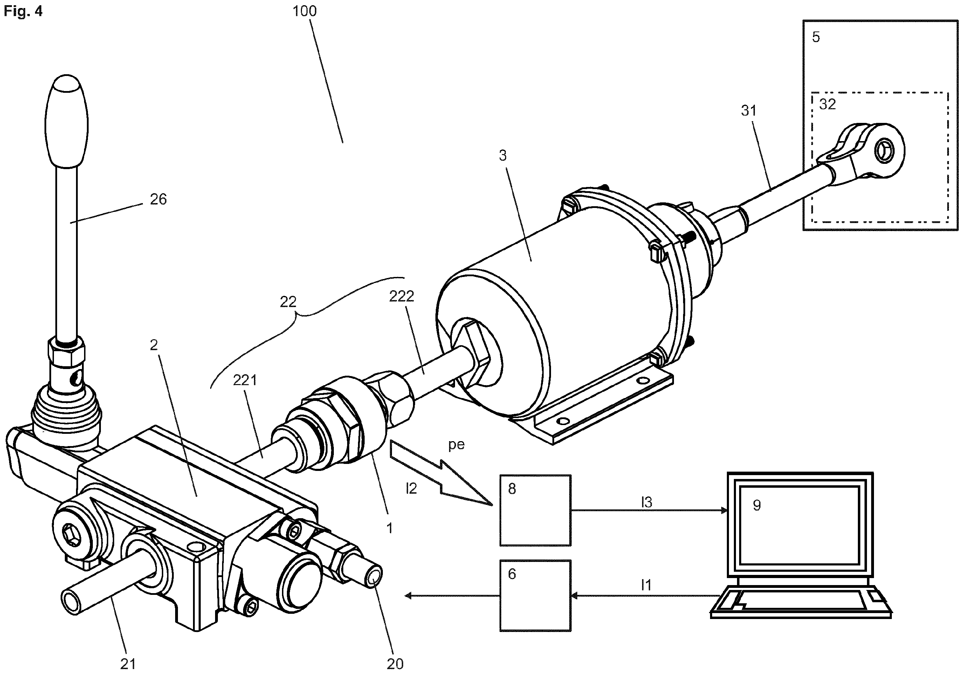

- Fig. 4: eine erfindungsgemässe Bremsvorrichtung 100 mit einem Steuerventil 2, mittels dessen ein von einer Druckleitung 21 abgegebener Bremsdruck über einen ersten Leitungsabschnitt 221 einer Bremsleitung 22, ein erfindungsgemässes Entlüftungsventil 1 und einen zweiten Leitungsabschnitt 222 der Bremsleitung 22 zu einem Bremszylinder 3 übertragbar ist, der eine Kolbenstange 31 umfasst, mittels der Bremselemente einer Fahrzeugbremse 32 eines Fahrzeugs 5, insbesondere eines Schienenfahrzeugs 5, betätigbar sind.

Fig. 1a zeigt die Eingangsseite eines erfindungsgemässen Entlüftungsventils 1, das ein Ventilgehäuse 11 mit einem Eingangsstutzen 111 aufweist, der einen Eingangskanal 1110 umschliesst und der mit einem ersten Leitungsabschnitt 221 einer Bremsleitung 22 verbunden ist, und das einen Ventilkopf 12 mit einem Ausgangsstutzen 126 (strichpunktiert gezeigt) aufweist, der einen Ausgangskanal 1260 umschliesst und der mittels einer Anschlussmutter 79 mit einem zweiten Leitungsabschnitt 222 der Bremsleitung 22 verbunden ist. Das Entlüftungsventil 1 ist von einer Arbeitsachse x durchstossen.

Das Ventilgehäuse 11 umfasst einen Gehäusekörper 115 mit dem Eingangsstutzen 111, mit einem Zugriffsprofil 117 für ein Werkzeug und einen Kopplungszylinder 118, in den der Ventilkopf 12 teilweise aufgenommen ist.

Fig. 1b zeigt die Ausgangsseite des Entlüftungsventils 1 von Fig. 1a mit dem in das Ventilgehäuse 11 eingesetzten Ventilkopf 12, der einen Ventilkörper 125 mit mehreren darin vorgesehenen Entlüftungskanälen 122 umfasst. Der Ventilkörper 125 ist in dieser Ausgestaltung des Entlüftungsventils 1 vollständig vom Kopplungszylinder 118 umschlossen.

In den Ventilkörper 125 ist ferner eine Sicherungsschraube 71 eingesetzt, von der eine Sicherungsscheibe 72, beispielsweise eine Unterlagsscheibe, gehalten ist, die in eine Ausnehmung oder Rastsenke 1182 eingreift, die im Kopplungszylinder 118 vorgesehen ist. Der Ventilkopf 12, der in den Kopplungszylinder 118 eingeschraubt wurde, kann sich daher nicht selbsttätig vom Ventilgehäuse 11 lösen. Der Ventilkopf 12 kann erst wieder gelöst werden, nachdem die Sicherungsschraube 71 entfernt wurde.

Der Ausgangsstutzen 126, der den Ausgangskanal 1260 umschliesst, ist von einem Klemmring 78 umschlossen, mittels dessen die Anschlussmutter 79 gehalten ist.

Fig. 2a zeigt das Entlüftungsventil 1 in der Ausrichtung von Fig. 1a in Explosionsdarstellung. Zusätzlich zum bereits genannten Ventilgehäuse 11 und zum Ventilkopf 12 sind ein Ventilkolben 13, eine Ventilfeder 14, ein Dichtungselement 15 und ein Dichtungsring 16, gezeigt, die koaxial zur Arbeitsachse x angeordnet sind.

Der Ventilkolben 13 umfasst eine kreisrunde Kolbenwand 134, an die peripher ein Führungszylinder anschliesst und die von acht Kolbenkanälen 130 durchstossen ist, die in gleichen Abständen voneinander entlang einer Kreislinie angrenzend an den Führungszylinder 135 angeordnet sind.

Das Dichtungselement 15 ist als Ringscheibe ausgebildet und aus elastischem Material gefertigt. Die Ventilfeder 14, die ein dem Ventilkolben 13 zugewandtes rückseitiges Endstück 141 und ein dem Ventilkopf 12 zugewandtes frontseitiges Endstück 142 aufweist, ist als Schraubenfeder ausgebildet.

Der Ventilkopf 12 umfasst den Ventilkörper 125, an den an der Frontseite der Ausgangsstutzen 126 anschliesst und der an der Rückseite vom Dichtungsring 16 umschlossen ist. Weiterhin umfasst der Ventilkörper 125 ein ringförmiges Verbindungsteil 128, das mit einem Aussengewinde 1281 versehen ist und das in eine Innengewinde 1181 eingedreht werden kann, das im Kopplungszylinder 118 vorgesehen ist (siehe Fig. 2b).

Weiterhin sind im Ventilkörper 125 sechs Durchgangskanäle 121 vorgesehen, deren Eingangsöffnungen in gleichen Abständen entlang einer Kreislinie am äusseren Rand des Ventilkörpers 125 angeordnet sind und die von den Eingangsöffnungen geneigt in den Ausgangskanal 1260 (siehe Fig. 3a) verlaufen.

Die Arbeitsachse x verläuft ferner koaxial durch eine im Ventilkörper 125 vorgesehene Entlüftungsöffnung 120 und eine daran anschliessende Verschlusskammer 1200, die von einem an der Rückseite des Ventilkörpers 125 angeformten Eingangszylinder 123 umschlossen sind. Stirnseitig ist am Eingangszylinder 123 ein Dichtungsring 1231 vorgesehen. Nachstehend wird beschrieben, dass das elastische Dichtungselement 15 derart gegen den Eingangszylinder 123 führbar ist, dass der Dichtungsring 1231 in das elastische Material des Dichtungselements 15 eingreifen kann, sodass eine dicht abgeschlossenen Verbindung zwischen dem Eingangszylinder 123 und dem Dichtungselement 15 resultiert.

Fig. 2b zeigt das Entlüftungsventil 1 in der Ausrichtung von Fig. 1b in Explosionsdarstellung. Das Ventilgehäuse 11 und der Ventilkopf 12, die voneinander getrennt sind, wurden bereits mit Bezug zu Fig. 1a beschrieben. Sichtbar ist eine radial nach aussen geöffnete Ringnut 129 am Ventilkörper 125, in die der Dichtungsring 16 eingesetzt wird. An der Frontseite des Kopplungszylinders 118 ist die Ausnehmung oder Rastsenke 1182 sichtbar, in die die Sicherungsscheibe 72 einführbar ist, die den Ventilkörper 125 radial nach aussen überragt.

Weiterhin ist gezeigt, dass an die Kolbenwand 134 an der Frontseite 13F des Ventilkolbens 13 ein Montagezylinder 133 anschliesst, der über einen verjüngten Kolbenhals 132 mit einem Kolbenkopf 131 verbunden ist. Der Ventilkolben 13 mit dem Montagezylinder 133, dem Kolbenhals 132, dem Kolbenkopf 131 und dem Führungszylinder 135 ist rotationssymmetrisch zur Arbeitsachse x ausgebildet und vorzugsweise einstückig aus einem Aluminiumstück gefertigt oder aus einem Kunststoff gegossen.

Fig. 3a zeigt einen parallel zur Arbeitsachse x verlaufenden Viertelschnitt durch das Ventilgehäuse 11 und den in den Montagezylinder 118 des Ventilgehäuses 11 eingeschraubten Ventilkopf 12. Die weiteren Elemente des Entlüftungsventils 1 wurden entfernt. Im Montagezylinder 118 des Ventilgehäuses 11 ist ein Innengewinde 1181 vorgesehen, das mit einem Aussengewinde 1281 an der Aussenseite eines Verbindungsteils 128 des Ventilkörpers 125 vorgesehen ist.

Es ist gezeigt, dass der vom Eingangsstutzen 111 umschlossene Eingangskanal 111 durch eine Rückwand 1101 in eine Kolbenkammer 110 einmündet, an die die Kanalöffnungen der Durchgangskanäle 121 und die Entlüftungsöffnung 120 im Ventilkörper 125 des Ventilkopfs 12 anschliessen. Die Durchgangskanäle 121 verlaufen geneigt in den Ausgangskanal 1260. An die Entlüftungsöffnung 120 schliesst eine zylindrische Verschlusskammer 1200 an, an der frontseitig mehrere Entlüftungskanäle 122 abzweigen, die je ein Eingangskanalsegment 1221 und ein Ausgangskanalsegment 1222 aufweisen, die ineinander einmünden und die durch Bohrungen senkrecht und parallel zur Arbeitsachse x in den Ventilkörper 125 eingearbeitet wurden.

Die zylindrisch ausgebildete Kolbenkammer 110 dient der verschiebbaren Lagerung des Ventilkolbens 13 und definiert daher mit ihrer Mittelachse die Arbeitsachse x des Entlüftungsventils 1.

In Fig. 3a ist ferner der der Kolbenkammer 110 zugewandte Eingangszylinder 123 des Ventilkörpers 125 gezeigt, der die Entlüftungsöffnung 120 und einen Teil der Verschlusskammer 1200 umschliesst und der stirnseitig einen an die Entlüftungsöffnung 120 anschliessenden Dichtungsring 1231 aufweist, der formschlüssig in das elastische Dichtungselement 15 eingreifen kann (siehe Fig. 3c).

Radial nach aussen schliesst eine Stützwand 124 an den Eingangszylinder 123 an. Die Ventilfeder 14 kann daher derart in die Kolbenkammer eingesetzt werden, dass deren frontseitiges Endstück den Eingangszylinder 123 umschliesst und an der Stützwand 124 anliegt.

Fig. 3a zeigt zudem ein optionales Distanzelement 1232, vorzugsweise eine Ringscheibe, gegebenenfalls eine Ringscheibe mit einem Innengewinde, das auf den Eingangszylinder 123 aufgesetzt und gegen die Stützwand 124 geführt oder mit einem Aussengewinde an der Aussenseite des Eingangszylinders 123 verschraubt wird. Durch das Einfügen des Distanzelements 1232 oder durch Drehen des Distanzelements 1232 kann die Vorspannung der Ventilfeder 13 und somit der Schaltdruck eingestellt werden, bei dem die Entlüftungsöffnung geöffnet wird.

Fig. 3b zeigt einen parallel zur Arbeitsachse x verlaufenden Viertelschnitt durch das Entlüftungsventil 1 von Fig. 1a. Das Ventilgehäuse 11 und der damit verbundene Ventilkopf 12 wurden mit Bezug zu Fig. 3a beschrieben. In die Kolbenkammer 110 sind nun der Ventilkolben 13, die Ventilfeder 14 und das Dichtungselement 15 eingesetzt.

Die Ventilfeder 14 umschliesst frontseitig den Eingangszylinder 123 des Ventilkörpers 125 und liegt frontseitig an der Stützwand 124 des Ventilkörpers 125 an. Rückseitig umschliesst die Ventilfeder 14 den Montagezylinder 133 des Ventilkolbens 13 und liegt an der Frontseite 13F der Kolbenwand 134 an. Die Kolbenwand 34 ist von Kolbenkanälen 130 durchstossen, von denen zwei gezeigt sind.

Der Ventilkolben 13 wird von der Ventilfeder 14 gegen die Rückwand 1101 der Kolbenkammer 110 gedrückt. Der Kolbenhals 132, der den Montagezylinder 133 mit dem Kolbenkopf 131 verbindet, ist kragenförmig vom elastischen Dichtungselement 15 umschlossen, das entfernt vom Eingangszylinder 123 gehalten ist, weshalb die Entlüftungsöffnung 120 noch geöffnet ist. Der Kolbenkopf 131 liegt an der Entlüftungsöffnung 120 an, verschliesst diese aber noch nicht. Zudem ist der Kolbenkopf 131 teilweise in die Verschlusskammer 1200 eingeführt, sodass er bei Einleitung eines Bremsdrucks weiter störungsfrei in die Verschlusskammer 1200 eingeführt werden kann. Durch die Ausgestaltung des Kolbenkopf 131 kann der Durchfluss des Bremsmediums in die Entlüftungskanäle 122 bestimmt werden, der nach der Öffnung der Entlüftungsöffnung 120 auftritt.

Fig. 3c zeigt das Entlüftungsventil 1 von Fig. 3b nach Anlegen eines Bremsdrucks p1 an den Eingangskanal 1110, durch den der Ventilkolben 13 gegen den Ventilkörper 125 und der Kolbenkopf 131 in die Verschlusskammer 1200 eingeführt wurde, sodass das Dichtungselement 15 die Entlüftungsöffnung 120, die Verschlusskammer 1200 und die Entlüftungskanäle 122 dicht abschliesst und das Bremsmedium ausschliesslich vom Eingangskanal 1110 zum Ausgangskanal 1260 des Entlüftungsventils 1 übertragen wird.

Das Dichtungselement 15 wurde kraftvoll gegen den Eingangszylinder 123 des Ventilkörpers 125 verschoben, sodass der Dichtungsring 1231 durch Materialverdrängung in das Dichtungselement 15 eindringen konnte, ohne dieses zu verletzen. Die Entlüftungsöffnung 120 ist daher dicht abgeschlossen.

Durch zwei identische Pfeile ist symbolisiert, dass der Wert des Luftdrucks p2 im Ausgangskanal 1260 bereits den Wert des Luftdrucks p1 im Eingangskanal erreicht hat, weshalb zwischen der Rückseite 13R und der Frontseite 13F des Ventilkolbens 13 keine Druckdifferenz vorliegt. Aufgrund des Unterschieds der wirksamen Flächen an der Rückseite 13R und der Frontseite 13F des Ventilkolbens 13 ist die von der Rückseite 13R auf den Ventilkolben 13 einwirkende Kraft F1 jedoch grösser als die von der Frontseite 1311 auf den Ventilkolben 13 einwirkende Kraft F2. Nach Subtraktion der einander entgegen gerichteten Kraftvektoren F1, F2 verbleibt stets eine Differenzkraft Fd, die auf die Rückseite 13R des Ventilkolbens 13 einwirkt und die der Federkraft Ff der Ventilfeder 14 entgegengesetzt ist.

Die Differenzkraft ist abhängig vom Luftdruck p1 = p2 innerhalb des Entlüftungsventils 1 und reduziert sich, sobald der Bremsdruck vom Steuerventil abgeschaltet wird. Falls der Luftdruck p1 = p2 unter einen definierten Wert fällt, der als Schaltdruck bezeichnet wird, reduziert sich die Differenzkraft Fd auf einen Wert, der geringer ist als der Wert der Federkraft Fd. Beim Auftreten des Schaltdrucks, der beispielsweise der Hälfte oder Dreiviertel des für den Bremsvorgang angewendeten Bremsdrucks p1 entspricht, wird der Ventilkolben 13 von der Ventilfeder 14 zurückgestossen und die Entlüftungsöffnung 120 geöffnet. Der verbliebene Restdruck wird daher je nach Dimensionierung der Entlüftungskanäle 122 innerhalb von weniger als 60 Sekunden, beispielsweise innerhalb von 20 Sekunden aufgehoben.

Fig. 4 zeigt eine erfindungsgemässe Bremsvorrichtung 100 in einer vorzugsweisen Ausgestaltung mit einem Steuerventil 2, mittels dessen eine Bremsleitung 22 mit einer Druckleitung 21 oder mit einer Auslassleitung 20 verbindbar ist. Die Druckleitung 21 ist beispielsweise an einen Druckbehälter oder einen Kompressor angeschlossen. Über das Steuerventil 2 kann daher ein Bremsdruck in die Bremsleitung 22 eingesteuert werden. Nach Abschluss des Bremsvorgangs kann die Bremsleitung 22 mit der Auslassleitung 20 verbunden und entlüftet werden.

Ein erster Leitungsabschnitt 221 der Bremsleitung 22 ist über das erfindungsgemässe Entlüftungsventil 1 und einen zweiten Leitungsabschnitt 222 der Bremsleitung 22 mit einem Bremszylinder 3 verbunden, der durch eine Kolbenstange 31 mit Bremselementen einer Fahrzeugbremse 32 eines Fahrzeugs 5, insbesondere eines Schienenfahrzeugs 5 verbunden ist.

Im Normalzustand der Bremsvorrichtung 100 erfolgt die Entlüftung der Bremsleitung 22 und des Bremszylinders 3 somit über das Steuerventil 2 und die Auslassleitung 20. Bei einer Fehlfunktion des Steuerventils 2 oder bei einem Verschluss der Auslassleitung 20 kann hingegen ein Restdruck in der Bremsleitung 22 verbleiben, der beispielsweise der Hälfte des Bremsdrucks entspricht und der bewirkt, dass die Fahrzeugbremse 32 nicht vollständig gelöst wird. Durch das Entlüftungsventil 1 wird dieser Restdruck über die Entlüftungskanäle 120 abgeleitet, wie dies oben beschrieben wurde.

Das sekundäre Problem des Festbremsens, das zu einer Beschädigung oder zu einem raschen Verschleiss der Bremsvorrichtung 32 führt, wird durch das erfindungsgemässe Entlüftungsventil 1 somit gelöst.

Das primäre Problem der Fehlfunktion des Steuerventils 2 oder eines Verschlusses der Auslassleitung 20 wird bei der Vorrichtung von Fig. 4 mittels eines Drucksensors 8 erfasst, der den Luftdruck pe in den Entlüftungskanälen 120 überwacht. Der Luftdruck pe wird über eine Druckleitung 12 zum Drucksensor 8 übertragen, der über eine Messleitung 12 mit dem Fahrzeugrechner 9 verbunden ist, welcher in der Folge die Aktivierung des Entlüftungsventils 1 und somit eine Fehlfunktion der Bremsvorrichtung 100 registriert und eine Wartung der Bremsvorrichtung 100 veranlasst.

Mittels des Entlüftungsventils 1 kann auf diese Weise ein unzulässiger Druckzustand in einer pneumatischen Leitung 22 in jeder pneumatischen Vorrichtung überwacht werden.

### Bezugszeichenliste

- 1: Entlüftungsventil
- 100: Bremsvorrichtung
- 11: Ventilgehäuse
- 110: Kolbenkammer
- 1101: Rückwand der Kolbenkammer 110
- 111: Eingangsstutzen
- 1110: Eingangskanal
- 115: Gehäusekörper
- 117: Zugriffsprofil
- 118: Kopplungszylinder
- 1181: Innengewinde
- 1182: Rastsenke
- 12: Ventilkopf
- 120: Entlüftungsöffnung
- 1200: Verschlusskammer
- 121: Durchgangskanal
- 122: Entlüftungskanal
- 1221: Eingangskanalsegment des Entlüftungskanals 122
- 1222: Ausgangskanalsegment des Entlüftungskanals 122
- 123: Eingangszylinder
- 1231: Dichtungsring
- 1232: Justierring
- 124: Stützwand
- 125: Ventilkörper
- 126: Ausgangsstutzen
- 1260: Ausgangskanal
- 128: Verbindungsteil
- 1281: Aussengewinde
- 129: Ringnut
- 13: Ventilkolben
- 130: Kolbenkanäle
- 131: Kolbenkopf
- 132: Kolbenhals
- 133: Montagezylinder
- 134: Kolbenwand
- 135: Führungszylinder
- 14: Ventilfeder
- 141: frontseitiges Endstück der Ventilfeder
- 142: rückseitiges Endstück der Ventilfeder
- 15: Dichtungselement
- 16: Dichtungsring
- 2: Steuerventil
- 20: Auslassleitung
- 21: Druckleitung
- 22: Bremsleitung
- 221: erster Leitungsabschnitt, Eingangsleitung
- 222: zweiter Leitungsabschnitt, Ausgangsleitung
- 26: Betätigungselement
- 29: Betätigungshebel
- 3: Bremszylinder
- 31: Kolbenstange
- 32: Bremselemente
- 5: Fahrzeug, Schienenfahrzeug
- 6: Aktor
- 71: Sicherungsschraube
- 72: Sicherungsscheibe
- 78: Klemmring
- 79: Anschlussmutter
- 8: Drucksensor
- 9: Fahrzeugrechner
- x: Arbeitsachse
- 11: Steuerleitung
- 12: Druckleitung
- 13: Messleitung
- F1: Druckkraft auf die Rückseite 13R des Ventilkolbens 13
- F2: Druckkraft auf die Frontseite 13F des Ventilkolbens 13
- Fd: Differenzkraft
- Ff: Federkraft
- p1: Druck im Eingangskanal
- p2: Druck im Ausgangskanal
- pe: Druck im Entlüftungskanal

## Patentansprüche

1. Entlüftungsventil (1) insbesondere für eine Bremsvorrichtung (100), mit einem Ventilgehäuse (11), das einen Eingangskanal (1110) aufweist, und mit einem Ventilkopf (12), der vom Ventilgehäuse (11) gehalten ist, der einen Ausgangskanal (1260) aufweist und der einen Ventilkörper (125) mit wenigstens einem darin vorgesehenen Entlüftungskanal (122) umfasst, der von einer Entlüftungsöffnung (120) zu einer Aussenseite des Ventilkörpers (125) verläuft, **dadurch gekennzeichnet,**
**dass** das Ventilgehäuse (11) eine Kolbenkammer (110) aufweist, die einerseits an den Eingangskanal (1110) und die anderseits an die Entlüftungsöffnung (120) des wenigstens einen Entlüftungskanals (122) anschliesst;
**dass** der Ventilkörper (125) wenigstens einen Durchführungskanal (121) aufweist, der die Kolbenkammer (110) mit dem Ausgangskanal (1260) verbindet,
**dass** ein Ventilkolben (13) vorgesehen ist,
- der in der Kolbenkammer (110) koaxial zu einer Arbeitsachse (x) der Kolbenkammer (110) gegen den Ventilkörper (125) verschiebbar gelagert ist,
- der eine dem Eingangskanal (1110) zugewandte Rückseite (13R), eine dem Ventilkörper (125) zugewandte Frontseite (13F) und wenigstens einen Kolbenkanal (130) aufweist, der von der Rückseite (13R) zur Frontseite (13F) verläuft,
**dass** an der Frontseite (13F) des Ventilkolbens (13) ein Dichtungselement (15) gehalten ist, das der Entlüftungsöffnung (120) zugewandt ist und mittels dessen die Entlüftungsöffnung (120) abschliessbar ist, wenn der Ventilkolben (13) gegen den Ventilkörper (125) verschoben wird, und
**dass** eine Ventilfeder (14) vorgesehen ist, die mit einem rückseitigen Endstück (142) an der Frontseite (13F) des Ventilkolbens (13) und mit einem frontseitigen Endstück (141) am Ventilkörper (125) anliegt.

2. Entlüftungsventil (1) nach Anspruch 1, **dadurch gekennzeichnet,**
**dass** der Ventilkörper (125) eine Verschlusskammer (1200) aufweist, die an die Entlüftungsöffnung (120) anschliesst und die mit dem wenigstens einen Entlüftungskanal (122) verbunden ist, und
**dass** der Ventilkolben (13) einen Kolbenhals (132) aufweist, der vom Dichtungselement (15) umschlossen ist und an den ein Kolbenkopf (131) anschliesst, der in die Verschlusskammer (1200) einführbar ist.

3. Entlüftungsventil (1) nach Anspruch 2, **dadurch gekennzeichnet, dass** der Durchmesser des Kolbenhalses (132) kleiner ist als der Durchmesser des Kolbenkopfs (131) und dass das Dichtungselement (15) ringförmig ausgebildet ist und den Kolbenhals (132) umschliesst.

4. Entlüftungsventil (1) nach Anspruch 1, 2 oder 3, **dadurch gekennzeichnet, dass** das Dichtungselement (15) aus einem elastischen Werkstoff, wie Kautschuk, NBR, oder Gummi gefertigt ist.

5. Entlüftungsventil (1) nach einem der Ansprüche 1 - 4, **dadurch gekennzeichnet, dass** die Rückseite (13R) und die Frontseite (13F) des Ventilkolbens (13) unterschiedliche Wirkflächen für den im Entlüftungsventil (1) herrschenden Druck (p) aufweisen und dass die Eingangsöffnungen und Ausgangsöffnungen der Kolbenkanäle (130) identische oder unterschiedliche Querschnitte aufweisen.

6. Entlüftungsventil (1) nach einem der Ansprüche 1 - 5, **dadurch gekennzeichnet, dass** die vorzugsweise als Schraubenfeder ausgebildete Ventilfeder (14) entsprechend dem Druck (p) gewählt ist, bei dem die Entlüftungsöffnung (120) vom Dichtungselement (15) zu verschliessen oder zu öffnen ist.

7. Entlüftungsventil (1) nach einem der Ansprüche 1 - 6, **dadurch gekennzeichnet, dass** das erste oder das zweite Endstück (141, 142) der Ventilfeder (14) auf ein Justierelement (1232) abgestützt ist, dass vom Ventilkolben (13) oder vom Ventilkörper (125) vorzugsweise justierbar gehalten ist.

8. Entlüftungsventil (1) nach einem der Ansprüche 1 - 7, **dadurch gekennzeichnet, dass** der Ventilkörper (125) an einer der Kolbenkammer (110) zugewandten Seite einen Eingangszylinder (123) aufweist, dessen Aussendurchmesser kleiner ist als der Durchmesser der Kolbenkammer (110) senkrecht zur Arbeitsachse (x), der die Entlüftungsöffnung 120) umschliesst und der vom frontseitigen Endstück (141) der Ventilfeder (14) umschlossen ist.

9. Entlüftungsventil (1) nach Anspruch 8, **dadurch gekennzeichnet, dass** am Eingangszylinder (123) ein Dichtungsring (1231) angeformt ist, der zum formschlüssigen Eingriff in das Dichtungselement (15) vorgesehen ist.

10. Entlüftungsventil (1) nach einem der Ansprüche 1 - 9, **dadurch gekennzeichnet, dass** der Ventilkolben (13) an der Frontseite (13F) einen Montagezylinder (133) aufweist, der über den Kolbenhals (132) mit dem Kolbenkopf (131) verbunden und vom rückseitigen Endstück (142) der Ventilfeder (14) umschlossen ist, oder dass der Ventilkolben (13) an der Frontseite (13F) einen Montagezylinder (133) aufweist, der über den Kolbenhals (132) mit dem Kolbenkopf (131) verbunden und der eine Kolbenwand (134), in der die Kolbenkanäle (130) vorgesehen sind, mit einem Führungszylinder (135) verbunden ist.

11. Entlüftungsventil (1) nach einem der Ansprüche 1 - 10, **dadurch gekennzeichnet, dass** mehrere Kolbenkanäle (130) ringförmig, vorzugsweise in gleichen Abständen voneinander und in gleichen Abständen von der Arbeitsachse (x) der Kolbenkammer (110) angeordnet sind und/oder dass mehrere der Kolbenkammer (110) zugewandte Kanalöffnungen (1210) der Durchgangskanäle (121) ringförmig, vorzugsweise in gleichen Abständen voneinander und in gleichen Abständen von der Arbeitsachse (x) der Kolbenkammer (110) angeordnet sind und dass die Durchgangskanäle (121) ausgehend von den Kanalöffnungen (1210) geneigt durch den Ventilkörper (125) hindurch in den Ausgangskanal (1260) hinein verlaufen.

12. Entlüftungsventil (1) nach einem der Ansprüche 1 - 11, **dadurch gekennzeichnet, dass** der wenigstens eine Entlüftungskanal (122) ein Eingangskanalsegment (1221) und ein Ausgangskanalsegment (1222) aufweist, die senkrecht zueinander ausgerichtet und miteinander verbunden sind und/oder dass mehrere Entlüftungskanäle (122) den Ventilkörper (125) in gleichen Abständen voneinander durchlaufen.

13. Entlüftungsventil (1) nach einem der Ansprüche 1 - 12, **dadurch gekennzeichnet, dass** das Ventilgehäuse (11) einen Kopplungszylinder (118) mit einem Innengewinde (1181) aufweist und dass der Ventilkörper (125), der ein Aussengewinde (1281) aufweist mit dem Kopplungszylinder (118) verschraubt ist und durch eine Sicherungsschraube (71) mit einer Sicherungsscheibe (72) verbunden ist, die in eine Ausnehmung (1182) im Kopplungszylinder (118) eingreift.

14. Bremsvorrichtung (100) mit einem Steuerventil (2), das durch eine Bremsleitung (22) mit einem Bremszylinder (3) verbunden ist, mittels dessen wenigstens ein Bremselement (32) betätigbar ist, und mit einem Entlüftungsventil (1) nach einem der Ansprüche 1 - 13, das einen ersten und einen zweiten Leitungsabschnitt (221, 222) der Bremsleitung (22) miteinander verbindet.

15. Fahrzeug (5), insbesondere Schienenfahrzeug, mit wenigstens einer Bremsvorrichtung (100) nach Anspruch 14.
